# EUROPEAN PATENT SPECIFICATION

(11) **EP 0 227 103 B1**
(45) Date of publication and mention of the grant of the patent: **28.07.1993**
(21) Application number: 86117952.1
(22) Date of filing: 23.12.1986
(51) Int. Cl.: C08K 9/04, C08K 9/06, C08K 9/08, C08L 27/12

(54) **Fluorinated polymers containing fillers and having improved properties**
Füllstoffhaltige Fluorpolymere mit verbesserten Eigenschaften
Polymères fluorocarbonés contenant des charges et ayant des qualités améliorées

(30) Priority: 23.12.1985 IT 2337485
(43) Date of publication of application: 01.07.1987
(73) Proprietor: AUSIMONT S.p.A., I-20121 Milano (IT)
(72) Inventor: Strepparola, Ezio, I-24047 Treviglio Bergamo (IT); Terenghi, Tiziano, I-20055 Renate Milan (IT); Monza, Enrico, I-20121 Milan (IT); Felippone, Fabio, I-20052 Monza (IT)
(74) Representative: Barz, Peter, Dr.

(56) References cited:
- EP-A- 0 165 649
- US-A- 3 810 874
- US-A- 3 950 588
- US-A- 4 036 807

## Description

The invention relates to fluorinated polymers or copolymers in the form of moulded articles having improved mechanical and surface properties. The polymers according to the invention contain a reinforcing filler based on glass, asbestos, silicates in general, carbon, aromatic polyamides, in the form of powders or fibres. Said reinforcing fillers are pretreated with fluoropolyethers having functional end groups, which impart improved mechanical properties and improved surface characteristics compared with the reinforcing fillers known in the art. The fillers treated according to the present invention remain perfectly dispersed in the polymer and, thus, during mechanical treatment, prevent the separation thereof in heterogeneous areas, which would impair the mechanical and surface properties.

US-A-4,036,807 relates to silanes and siloxanes having one or more unsaturated fluorocarbon substituents therein. Said compounds may be used, among others, for the treatment of glass fillers in the manufacture of filled granular grades of fluorocarbon polymers. Particularly, according to said document correspondingly treated fillers can be employed in a certain aqueous agglomeration method to produce free flowing filled particles from poorly flowing polymer.

US-A-3,950,588 describes substrates or articles having surfaces with silanol-reactive groups, e.g. glassware, which are coated with hydrolyzable di-silyl poly(perfluorooxyalkylene) compounds to provide said substrates or articles with a durable, oil and water repellent, abrasion resistant polysiloxane coating or film.

It is well-known that, in order to improve the mechanical and surface characteristics of fluorinated polymers, these are reinforced with fillers, in particular, glass fibres treated with organic compounds, so as to increase the compatibility of such fibres with polymers such as, for example, polytetrafluoroethylene.

According to US-A- 3 787 281, the glass fibre treatment is carried out by means of a hydrolizable non-fluorinated siloxane compound containing an amine end group.

According to GB-A-1 250 798, both siloxane compounds and alkoxy-titanium compounds are utilized for the surface treatment of reinforcing materials such as glass fibres or metal powders. The compounds utilized for said treatment do not contain fluorine. Examples thereof are, in particular, Ti-tetrabutylate, 3-aminopropyl-triethoxy-silane and phenylmethyl-polysiloxane.

The articles obtained from the polymers which have been reinforced according to conventional methods are not always satisfactory as regards homogenization of the reinforcing material with the polymer. Such non-homogeneity results in an irregular surface appearance and in a grey shade as well as a rather low mechanical strength, in particular, as regards the flex-life of treated fabrics.

It has now, surprisingly, been found that it is possible to obtain fluorinated polymers containing reinforcing materials which are perfectly homogenized in the polymer composition and exhibit a high adhesion to the same. Furthermore, the appearance of the manufactured articles is improved owing to the absence of any grey shade and to the surface regularity and homogeneity.

The reinforced polymeric materials of the invention are prepared by incorporating into tetrafluoroethylene polymers or copolymers a reinforcing material based on glass, asbestos and silicates in general or carbon in the form of fibres or granules or a material consisting of aromatic polyamide fibres, said reinforcing material having been pretreated on its surface with fluoropolyether compounds acting as a bonding agent.

Such compounds comprises, e.g., sequences of one or more fluorooxyalkylene units selected from the following classes:

(CF₂O)

(CF₂CF₂O)

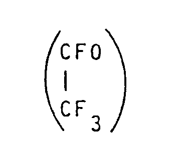

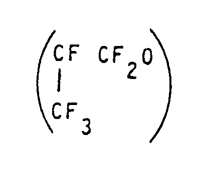

(CH₂CF₂CF₂O)

(CF₂CF₂CF₂O)

Said sequences can be linked to one another by divalent perfluoroalkylene groups, preferably containing 1 to 8 carbon atoms or by divalent non-fluorinated radicals, and they exhibit, at one or at both ends, functional groups suited to form chemical or physical bonds of different nature with the reinforcing material.

Such functional groups are selected from:
a. Siloxane groups;
b. Alkoxy-titanium groups;
c. An epoxy group 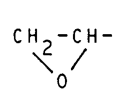
d. An acrylic group CH₂ = CH-COO-;
   or methacrylic group 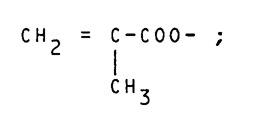
e. An isocyanic group;
f. Aromatic radicals, optionally containing heteroatoms capable of forming coordination or charge-transfer bonds.

The functional groups a. to e. are linked to the fluoropolyether chain by divalent linking groups preferably comprising one or more of the following groups:

-CONH-R-

-CH₂O(CH₂)ₙ-

-CH₂O(CH₂-CH₂O)ₘ-

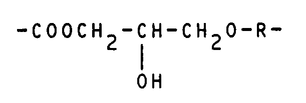

where n is an integer of from 0 to 6, m is an integer of from 0 to 3 and R is an alkylene radical containing 1 to 6 carbon atoms or an arylene radical containing 6 to 10 carbon atoms while the functional groups of class f. are linked to the fluoropolyether chain by means of divalent linking groups comprising, in particular:

-CH₂O-

-CH₂-O-CH₂-

-CF₂-

-CF₂O-

The functional end groups belonging to class a. are represented by the following formula:

Si (OR) AA′

where R is an alkyl radical containing 1 to 5 carbon atoms or an aryl radical containing 6 to 10 carbon atoms or an arylalkyl or alkylaryl radical containing 7 to 10 carbon atoms and A and A′, alike or different from each other, are -R or -OR.

The functional end groups belonging to class b. are represented by the following formula:

-Ti (OR)₃

where R is the same as defined above, the three -OR being equal or different from each other.

The end groups belonging to class f. are aromatic radicals comprising at least one aromatic ring having 5 to 6 atoms which, optionally, comprise one or more heteroatoms, or one or more rings condensed with such aromatic ring, some of said rings optionally being cycloaliphatic rings. These aromatic radicals preferably contain 6 to 20 carbon atoms and, optionally, C₁-C₃ alkyl groups and/or C₁-C₃ alkoxy groups and/or halogen atoms as substituents.

Examples of end groups belonging to class f. are, for example, those described in IT-A-21480 A/84 in the name of applicant, the preferred groups being, in particular:

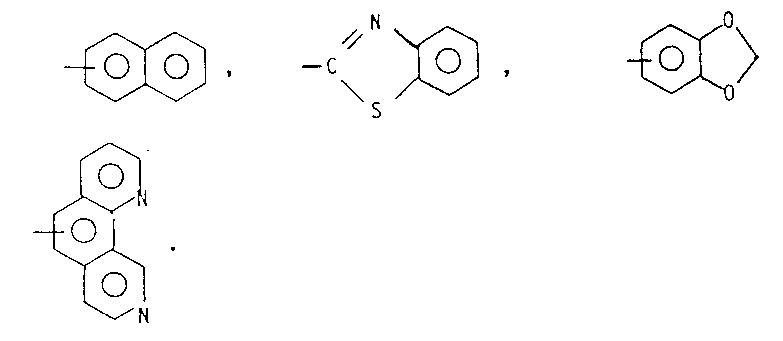

Fluoropolyether compounds useful in the present invention are those having an average molecular weight of from 1000 to 10 000, preferably of from 1500 to 4000. They are prepared by grafting, according to conventional methods, the above-indicated functional end groups onto known fluoropolyethers having reactive groups at one or at both ends.

If there is only one functional end group of the above-mentioned type, the other end of the fluoropolyether will, generally, consist of a neutral end group of the type which is known from the starting fluoropolyethers, in particular, a C₁-C₃ perfluoroalkyl group.

The compounds having siloxane or alkoxytitanium end groups are, in particular, used when the reinforcing filler is based on glass, asbestos or silicates in general while, when the filler is based on carbon, it is preferable to use compounds having functional groups of classes f. and c.

The fluoropolyether compounds useful in the present invention may be prepared according to the methods and processes disclosed in US-A-3 242 218, 3 665 041, 3 715 378, 3 810 874, 3 814 741, 3 847 978 and 4 523 039, EP-A-148 482 and 151 877, GB-A-1 244 189 and IT-A-22902 A/85 of the applicant.

The treatment of the reinforcing material with the fluoropolyether compound can be carried out by contacting said material with a solution of the fluoropolyether compound. The solvent is then evaporated, preferably, by heating the material.

The fluorinated polymers of the present invention are homopolymers of C₂F₄ or copolymers thereof with minor amounts of perfluoropropene and/or of a perfluoroalkylperfluorovinyl ether of the type R_{f}-O-CF=CF₂, where R_{f} is a perfluoroalkyl radical containing 1 to 3 carbon atoms. Commercially known are C₂F₄/C₃F₆ copolymers containing up to 50 mole-% of C₃F₆, C₂F₄/R_{f}-O-CF=CF₂ copolymers containing up to 7 mole-% of perfluoroalkylperfluorovinyl ether and terpolymers in which the two above-mentioned comonomers are present in amounts up to 12% by weight and up to 3% by weight, respectively.

In a further embodiment of the present invention, fabrics based on fibres of glass, asbestos, carbon or aromatic polyamides, after treatment with functionalized fluoropolyethers as described above, are impregnated with an aqueous dispersion of fluorinated polymers or copolymers, thus leading, after proper heat-treatment, to articles having improved mechanical characteristics, in particular, an improved flex-life.

The following examples merely serve to illustrate the invention and do not limit it in any way.

### Example 1

Non-dressed glass fibres E (see Kirk-Othmer, Encyclopedia of Chemical Technology, Vol. 6, pages 692 to 694, 3rd ed.) having a length of 5 to 25 mm and an average diameter of 12 µm were caused to macerate for 20 hours at room temperature in a solution consisting of 80% by volume of Freon® 113, 18% by volume of ethanol and 2% by volume of H₂O, containing compound (I):

[O-(C₂F₄O)₁₀(CF₂O)₁₀] [CF₂-CO-NHC₃H₆Si(OCH₃)₃]₂

in an amount of 0.15% by weight, based on the treated fibres. The fibres were dried for 2 hours at 60°C at reduced pressure.

30 parts by weight of the fibres thus treated were mixed with 70 parts by weight of an C₂F₄/C₃F₆ copolymer (FEP) containing 12 mole-% of C₃F₆ and having a melt flow index equal to 32 (determined according to ASTM D 238 at 372°C and with a 5 kg load). The mixture was charged to the hopper of a single-screw extruder equipped with an outlet nozzle of 3 mm diameter. The temperature in the feed area was 300°C, that in the middle area was 340°C and that in the head was 350°C.

The extrudate was granulated and again passed through the extruder under the same conditions in order to obtain an oriented-fibre extrudate.

The strands were placed parallel to one another into a mould of 10 cm side and 1 mm thickness, in order to maintain the glass fibre orientation generated during the extrusion. By compression-moulding at 350°C, small plates were obtained from which test pieces were punched for tensile tests according to ASTM D 638. The punching and traction directions corresponded to the orientation of the glass fibres in the material.

The tensile stress, measured at 23°C and at a stretching rate of 5 cm/min was equal to 480 kg/cm², which corresponded to an improvement of about 250% with respect to the polymer as such, 70% with respect to the polymer reinforced with non-dressed glass fibres and 30% with respect to the polymer reinforced with glass fibres treated with compound

NH₂C₃H₆Si(OC₂H₅)₃ (II)

.

### Example 2

Carbon fibres of 3 mm length, having an average diameter of 7 µm, were wetted with a solution comprising 80% by volume of Freon® 113, 20% by volume of ethanol and containing 0.15% by weight, based on the carbon fibres, of compound: 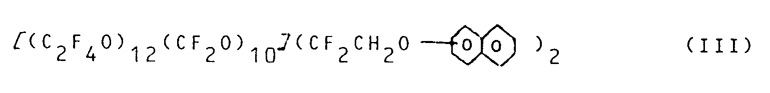
having an average molecular weight of about 2400.
The wet fibres were left for 20 hours at room temperature, whereafter the solvent was evaporated for 2 hours at 60°C and at reduced pressure.

The fibres (15 parts by weight) were mixed with 85 parts by weight of FEP. Extrusion, moulding and characterization were then carried out as described in example 1.

This product exhibited a tensile strength of 620 kg/cm², which corresponded to an improvement of 380% with respect to the polymer as such and 20% with respect to the polymer reinforced with non-dressed carbon fibres.

### Example 3

A fluorinated epoxy polymer (IV) was prepared as follows:

In a three-neck flask 22.4 g of potassium tert-butylate were dissolved in 250 ml of tert-butanol, maintained at 35°C by means of an external heating bath. Within 5 minutes 200 g of α,ω- bis-(hydroxymethyl)-polyoxyperfluoroalkylene of the type Fomblin Z®, prepared according to US-A-3 810 874, having a molecular weight of 2000 (0.1 mole), were added. The mixture was stirred for 1 hour at 35°C and then 27.8 g of epichlorohydrin were added and the mixture was heated to 70°C. This temperature was maintained for 4 hours. The crude product obtained was poured into 700 ml of distilled water at 25°C under stirring. It was allowed to rest and the heavier phase was separated, dissolved in a solution of DELIFRENE LS® and acetone (80/20), dehydrated with Na₂SO₄ and filtered. A fluorinated polymer (57.7% F; 0.6% H) having an epoxy equivalent weight of 2560 was obtained.

The impregnation of a carbon fibre fabric, weighing 200 g/m², with 5 threads/cm for both the weft and the warp and with 3000 filaments per thread was accomplished by immersing the cloth into a DELIFRENE LS® solution containing 10% by weight of the epoxy polymer IV, prepared as described above, 2.2 moles of diethylene triamine and 0.001 moles of DABCO® (diazabicyclooctane).

The cloth was then dried for 2 hours at 60°C and a further crosslinking treatment at 80° C was carried out for 2 hours. The product was impregnated with 9.8% by weight of the epoxy compound IV.

After having been subjected to said treatment, the carbon fibre fabric was immersed into an aqueous dispersion containing 40% by weight of PTFE and then dried. Water was evaporated at 100°C and the cloth was dried for 5 minutes at 200°C and then brought to room temperature.

The impregnation cycle was repeated three times, followed by drying and heating to 200°C but using an aqueous dispersion of PTFE at 60% by weight for the impregnation. A fabric coated with 50% by weight of PTFE was obtained which was sintered at 400°C for 7 minutes. The resulting product was perfectly smooth and free of exposed fibres.

Test pieces of 15 mm width and 15 cm length were cut from the impregnated fabric thus obtained. These fabric strips were subjected to a predetermined number of bendings according to the method described in ASTM 2176/69 and the tensile strength of the test pieces thus treated was measured and compared with that of test pieces not subjected to bending.

The flex resistance is reported as percentage of tensile strength retained after flexure.

For the carbon fibre fabric treated with compound IV as described above, the tensile strength at 23°C and at a stretching rate of 10 mm/min, measured on test pieces after 50 bendings, was 82 kg/cm, which corresponds to 93% of the tensile strength of the fabric that had not been bent.

By comparison, for carbon fibre fabric not pretreated with compound IV and treated with the same PTFE dispersion in order to obtain the same percentage of PTFE impregnation the tensile strength, measured on test pieces subjected to 50 bendings, was 10 kg/cm, which corresponds to 11% of the tensile strength of the cloth that had not been bent.

## Claims (Claims for the following Contracting State(s): DE, FR, GB, IT, NL, SE)

1. Fluorinated polymers having improved mechanical properties and an improved surface appearance, comprising a reinforcing material based on glass, asbestos and silicates in general or carbon in the form of fibres or granules or aromatic polyamide fibres, said reinforcing material having been superficially treated with fluoropolyethers having an average molecular weight of from 1000 to 10000, containing functional end groups suited to form bonds of various nature with the reinforcing material, said functional groups being selected from:
a. Siloxane groups;
b. Alkoxy-titanium groups;
c. An epoxy group 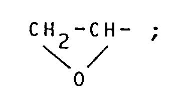
d. An acrylic group CH₂ = CH-COO-;
or methacrylic group 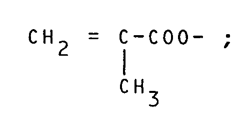
e. An isocyanic group;
f. Aromatic radicals, optionally containing heteroatoms capable of forming coordinative bonds or charge-transfer bonds;
said functional groups being linked to the fluoropolyether chain by means of divalent linking groups.

2. The fluorinated polymers of claim 1, wherein the linking groups for the functional groups a. to e. are selected from:
-CONH-R-
;
-CH₂O(CH₂)ₙ
;
-CH₂O(CH₂-CH₂O)ₘ-
; 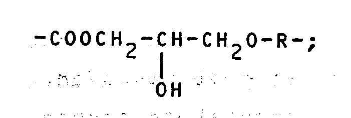 wherein n is an integer of from 0 to 6, m is an integer of from 0 to 3 and R is an alkylene radical containing 1 to 6 carbon atoms, or an arylene radical containing 6 to 10 carbon atoms, while the functional groups of class f. are linked to the fluoropolyether chain by means of divalent linking groups selected from:
-CF₂O-
;
-CH₂-O-CH₂-
;
-CF₂-
;
-CF₂O-
.

3. The fluorinated polymers of claim 1, wherein the fluoropolyether compound comprises sequences of one or more fluorooxyalkylene units selected from the following classes:
(CF₂O)
;
(CF₂CF₂O); 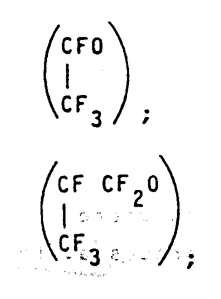
(CH₂CF₂CF₂O)
(CF₂CF₂CF₂O)
said sequences being linked to one another by divalent fluorinated or non-fluorinated groups.

4. The fluorinated polymers of claim 1, wherein the functional end groups belonging to class a. are represented by the following formula:
Si (OR) AA
'
wherein R is an alkyl radical containing 1 to 5 carbon atoms or an aryl radical containing 6 to 10 carbon atoms or an arylalkyl or alkylaryl radical containing 7 to 10 carbon atoms and wherein A and A', equal to or different from each other, are -R or -OR.

5. The fluorinated polymers of claim 1, wherein the functional end groups belonging to class b. are represented by the following formula:
-Ti (OR)₃
wherein the three -OR groups are equal to or different from each other and R is the same as defined in claim 4.

6. The fluorinated polymers of claim 1, wherein the end groups belonging to class f. are aromatic radicals comprising at least one aromatic ring having 5 to 6 atoms, optionally comprising heteroatoms, or one or more rings condensed with such aromatic ring, some of such rings being optionally of the cycloaliphatic type, and said aromatic radicals optionally containing C₁-C₃ alkyl groups and/or C₁-C₃ alkoxy groups and/or halogen atoms as substituents.

7. The fluorinated polymers of any one of claims 1 to 6, wherein the fluorinated polymer is a polymer of C₂F₄ or a copolymer of C₂F₄ with minor amounts of perfluoropropene and/or perfluoroalkylperfluorovinyl ethers.

## Claims (Claims for the following Contracting State(s): ES)

1. Process for the preparation of fluorinated polymers having improved mechanical properties and an improved surface appearance, which process comprises the incorporation into tetrafluorethylene polymers or copolymers of a reinforcing material based on glass, asbestos and silicates in general or carbon in the form of fibres or granules or aromatic polyamide fibres, said reinforcing material having been superficially treated with fluoropolyethers having an average molecular weight of from 1000 to 10000, containing functional end groups suited to form bonds of various nature with the reinforcing material, said functional groups being selected from:
a. Siloxane groups;
b. Alkoxy-titanium groups;
c. An epoxy group 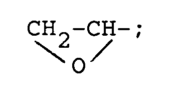
d. An acrylic group CH₂ = CH-COO-;
or methacrylic group 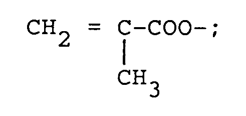
e. An isocyanic group;
f. Aromatic radicals, optionally containing heteroatoms capable of forming coordinative bonds or charge-transfer bonds;
said functional groups being linked to the fluoropolyether chain by means of divalent linking groups.

2. The process of claim 1, wherein the linking groups for the functional groups a. to e. are selected from:
-CONH-R-
;
-CH₂O(CH₂)ₙ
;
-CH₂O(CH₂-CH₂O)ₘ-
; 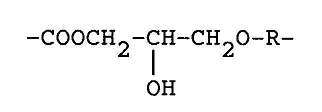 wherein n is an integer of from 0 to 6, m is an integer of from 0 to 3 and R is an alkylene radical containing 1 to 6 carbon atoms or an arylene radical containing 6 to 10 carbon atoms, while the functional groups of class f. are linked to the fluoropolyether chain by means of divalent linking groups selected from:
-CH₂O-
;
-CH₂-O-CH₂-
;
-CF₂-
;
-CF₂O-
.

3. The process of claim 1, wherein the fluoropolyether compound comprises sequences of one or more fluorooxyalkylene units selected from the following classes:
(CF₂O)
;
(CF₂CF₂O)
; 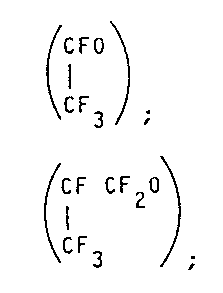
(CH₂CF₂CF₂O)
(CF₂CF₂CF₂O)
said sequences being linked to one another by divalent fluorinated or non-fluorinated groups.

4. The prcoess of claim 1, wherein the functional end groups belonging to class a. are represented by the following formula:
Si (OR) AA'
wherein R is an alkyl radical containing 1 to 5 carbon atoms or an aryl radical containing 6 to 10 carbon atoms or an arylalkyl or alkylaryl radical containing 7 to 10 carbon atoms and wherein A and A', equal to or different from each other, are -R or -OR.

5. The process of claim 1, wherein the functional end groups belonging to class b. are represented by the following formula:
-Ti (OR)₃
wherein the three -OR groups are equal to or different from each other and R is the same as defined in claim 4.

6. The process of claim 1, wherein the end groups belonging to class f. are aromatic radicals comprising at least one aromatic ring having 5 to 6 atoms, optionally comprising heteroatoms, or one or more rings condensed with such aromatic ring, some of such rings being optionally of the cycloaliphatic type, and said aromatic radicals optionally containing C₁-C₃ alkyl groups and/or C₁-C₃ alkoxy groups and/or halogen atoms as substituents.

7. The process of any one of claims 1 to 6, wherein the fluorinated polymer is a polymer of C₂F₄ or a copolymer of C₂F₄ with minor amounts of perfluoropropene and/or perfluoroalkylperfluorovinyl ethers.

## Patentansprüche (Patentansprüche für folgende(n) Vertragsstaat(en): DE, FR, GB, IT, NL, SE)

1. Fluorierte Polymere mit verbesserten mechanischen Eigen-Schaften und verbessertem Oberflächenaussehen, umfassend ein verstärkendes Material auf der Basis von Glas, Asbest und Silikaten im allgemeinen oder Kohlenstoff in Form von Fasern oder Granula oder aromatische Polyamidfasern, wobei die Oberfläche des verstärkenden Materials behandelt wurde mit Fluorpolyethern mit einem durchschnittlichen Molekulargewicht von 1000 bis 10000, zur Bildung von Bindungen von verschiedener Natur mit dem verstärkenden Material geeignete funktionelle Endgruppen enthaltend, wobei die funktionellen Gruppen ausgewählt sind aus:
a. Siloxangruppen;
b. Alkoxy-Titan-Gruppen;
c. einer Epoxygruppe 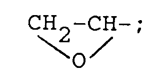
d. einer Acrylgruppe CH₂ = CH-COO-;
oder Methacrylgruppe CH₂ = C(CH₃)-COO-;
e. einer Isocyanatgruppe;
f. aromatischen Resten, gegebenenfalls Heteroatome enthaltend, die coordinative Bindungen oder Charge-Transfer-Bindungen bilden können;
wobei diese funktionellen Gruppen mit Hilfe von zweiwertigen Verbindungsgruppen an die Fluorpolyetherkette gebunden sind.

2. Fluorierte Polymere nach Anspruch 1, worin die Verbindungsgruppen für die funktionellen Gruppen a. bis e. ausgewählt sind aus:
-CONH-R-
;
-CH₂O(CH₂)ₙ
;
-CH₂O(CH₂-CH₂O)ₘ-
; 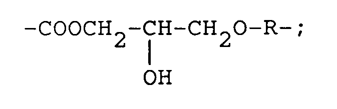 worin n eine ganze Zahl von 0 bis 6 ist, m eine ganze Zahl von 0 bis 3 ist und R ein Alkylenrest, der 1 bis 6 Kohlenstoffatome enthält, oder ein Arylenrest, der 6 bis 10 Kohlenstoffatome enthält, ist, während die funktionellen Gruppen der Klasse f. durch zweiwertige Verbindungsgruppen, die ausgewählt sind aus:
-CH₂O-
;
-CH₂-O-CH₂-
;
-CF₂-
;
-CF₂O-
,
an die Fluorpolyetherkette gebunden sind.

3. Fluorierte Polymere nach Anspruch 1, worin die Fluorpolyetherverbindung Abfolgen von einer oder mehr Fluoroxyal-kylen-Einheiten umfaßt, die aus den folgenden Klassen ausgewählt sind:
(CF₂O)
;
(CF₂CF₂O)
; 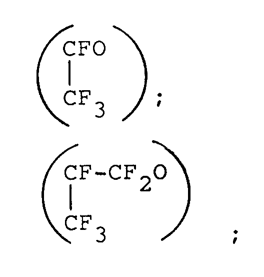
(CH₂CF₂CF₂O)
(CF₂CF₂CF₂O)
wobei diese Abfolgen durch zweiwertige fluorierte oder nicht-fluorierte Gruppen miteinander verknüpft sind.

4. Fluorierte Polymere nach Anspruch 1, worin die zur Klasse a. gehörigen funktionellen Endgruppen durch die folgende Formel dargestellt werden:
Si (OR) AA'
worin R ein Alkylrest, der 1 bis 5 Kohlenstoffatome enthält, oder ein Arylrest, der 6 bis 10 Kohlenstoffatome enthält, oder ein Arylalkyl- oder Alkylaryl-Rest, der 7 bis 10 Kohlenstoffatome enthält, ist und worin A und A', gleich oder verschieden voneinander, für -R oder -OR stehen.

5. Fluorierte Polymere nach Anspruch 1, worin die zur Klasse b. gehörigen funktionellen Endgruppen durch die folgende Formel dargestellt werden:
-Ti (OR)₃
worin die drei Gruppen -OR gleich oder verschieden voneinander sind und R gleich wie in Anspruch 4 definiert ist.

6. Fluorierte Polymere nach Anspruch 1, worin die zur Klasse f. gehörigen Endgruppen aromatische Reste sind, die wenigstens einen aromatischen Ring mit 5 bis 6 Atomen, gegebenenfalls Heteroatome umfassend, oder einen oder mehr Ringe, die mit einem derartigen aromtischen Ring kondensiert sind, wobei einige dieser Ringe gegebenenfalls vom cycloaliphatischen Typ sind, umfassen, und die aromatischen Reste gegebenenfalls C₁-C₃-Alkylgruppen und/ oder C₁-C₃-Alkoxygruppen und/oder Halogenatome als Substituenten enthalten.

7. Fluorierte Polymere nach irgendeinem der Ansprüche 1 bis 6, worin das fluorierte Polymer ein Polymer von C₂F₄ oder ein Copolymer von C₂F₄ mit kleineren Mengen an Perfluorpropen und/oder Perfluoralkylperfluorvinylethern ist.

## Patentansprüche (Patentansprüche für folgende(n) Vertragsstaat(en): ES)

1. Verfahren zur Herstellung von fluorierten Polymeren mit verbesserten mechanischen Eigenschaften und einem verbesserten Oberflächenaussehen, umfassend die Einverleibung in Tetrafluorethylen-Polymere oder -Copolymere eines verstärkenden Materials auf der Basis von Glas, Asbest und Silikaten im allgemeinen oder von Kohlenstoff in Form von Fasern oder Granula oder aromatischen Polyamidfasern, wobei die Oberfläche des verstärkenden Materials behandelt wurde mit Fluorpolyethern mit einem durchschnittlichen Molekulargewicht von 1000 bis 10000, zur Bildung von Bindungen von verschiedener Natur mit dem verstärkenden Material geeignete funktionelle Endgruppen enthaltend, wobei die funktionellen Gruppen ausgewählt sind aus:
a. Siloxangruppen;
b. Alkoxy-Titan-Gruppen;
c. einer Epoxygruppe 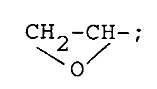
d. einer Acrylgruppe CH₂ = CH-COO-;
oder Methacrylgruppe CH₂ = C(CH₃)-COO-;
e. eine Isocyanatgruppe;
f. aromatischen Resten, gegebenenfalls Heteroatome enthaltend, die coordinative Bindungen oder Charge-Transfer-Bindungen bilden können;
wobei diese funktionellen Gruppen mit Hilfe von zweiwertigen Verbindungsgruppen an die Fluorpolyetherkette gebunden sind.

2. Verfahren nach Anspruch 1, bei welchem die Verbindungsgruppen für die funktionellen Gruppen a. bis e. ausgewählt sind aus:
-CONH-R-
;
-CH₂O(CH₂)ₙ
;
-CH₂O(CH₂-CH₂O)ₘ-
; 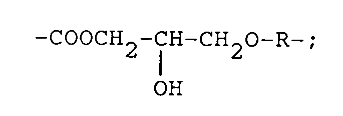 worin n eine ganze Zahl von 0 bis 6 ist, m eine ganze Zahl von 0 bis 3 ist und R ein Alkylenrest, der 1 bis 6 Kohlenstoffatome enthält, oder ein Arylenrest, der 6 bis 10 Kohlenstoffatome enthält, ist, während die funktionellen Gruppen der Klasse f. durch zweiwertige Verbindungsgruppen, die ausgewählt sind aus:
-CH₂O-
;
-CH₂-O-CH₂-
;
-CF₂-
;
-CF₂O-
,
an die Fluorpolyetherkette gebunden sind.

3. Verfahren nach Anspruch 1, bei welchem die Fluorpolyetherverbindung Abfolgen von einer oder mehr Fluoroxyalkylen-Einheiten umfaßt, die aus den folgenden Klassen ausgewählt sind:
(CF₂O)
;
(CF₂CF₂O)
; 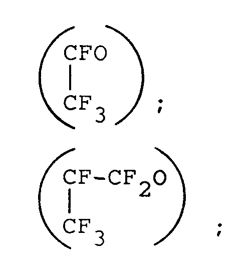
(CH₂CF₂CF₂O)
(CF₂CF₂CF₂O)
wobei diese Abfolgen durch zweiwertige fluorierte oder nicht-fluorierte Gruppen miteinander verknüpft sind.

4. Verfahren nach Anspruch 1, bei welchem die zur Klasse a. gehörigen Endgruppen durch die folgende Formel dargestellt werden:
Si (OR) AA'
worin R ein Alkylrest, der 1 bis 5 Kohlenstoffatome enthält, oder ein Arylrest, der 6 bis 10 Kohlenstoffatome enthält, oder ein Arylalkyl- oder Alkylaryl-Rest, der 7 bis 10 Kohlenstoffatome enthält, ist und worin A und A', gleich oder verschieden voneinander, für -R oder -OR stehen.

5. Verfahren nach Anspruch 1, bei welchem die zur Klasse b. gehörigen funktionellen Endgruppen durch die folgende Formel dargestellt werden:
-Ti (OR)₃
worin die drei Gruppen -OR gleich oder verschieden voneinander sind und R gleich wie in Anspruch 4 definiert ist.

6. Verfahren nach Anspruch 1, bei welchem die zur Klasse f. gehörigen Endgruppen aromatische Reste sind, die wenigstens einen aromatischen Ring mit 5 bis 6 Atomen, gegebenenfalls Heteroatome umfassend, oder einen oder mehr Ringe, die mit einem derartigen aromtischen Ring kondensiert sind, wobei einige dieser Ringe gegebenenfalls vom cycloaliphatischen Typ sind, umfassen, und die aromatischen Reste gegebenenfalls C₁-C₃-Alkylgruppen und/ oder C₁-C₃-Alkoxygruppen und/oder Halogenatome als Substituenten enthalten.

7. Verfahren nach irgendeinem der Ansprüche 1 bis 6, bei welchem das fluorierte Polymer ein Polymer von C₂F₄ oder ein Copolymer von C₂F₄ mit kleineren Mengen an Perfluorpropen und/oder Perfluoralkylperfluorvinylethern ist.

## Revendications (Revendications pour l'(les) Etat(s) contractant(s) suivant(s): DE, FR, GB, IT, NL, SE)

1. Polymères fluorés présentant des propriétés mécaniques améliorées ainsi qu'un aspect superficiel amélioré, comprenant le matériau de renforcement à base de verre, d'amiante et de silicate en général ou de carbone, sous forme de fibres ou de granules ou de fibres polyamides aromatiques, ledit matériau de renforcement ayant été superficiellement traité par des fluoropolyéthers ayant un poids moléculaire moyen compris entre 1000 et 10000 contenant des groupes terminaux fonctionnels susceptibles de former des liaisons de diverses natures avec le matériau de renforcement, ces groupes fonctionnels ayant été choisis parmi:
a. groupes siloxane;
b. des groupes alcoxy-titane;
c. groupe époxy 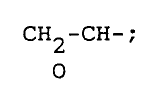
d. des groupes acryliques CH₂ = CH-COO-;
ou méthacryliques 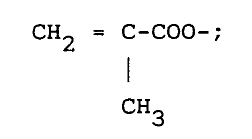
e. groupe isocyanique;
f. Radicaux aromatiques contenant éventuellement des hétéroatomes susceptibles de former des liaisons de coordination ou de transfert de charge;
ces groupes fonctionnels étant liés à la chaine fluoropolyéther au moyen de groupes de liaison divalents.

2. Polymères fluorés selon la revendication 1, dans lesquels les groupes de liaison des groupes fonctionnels a à e sont choisis parmi:
-CONH-R- ;
-CH₂O(CH₂)ₙ- ;
-CH₂O(CH₂-CH₂O)ₘ- ; 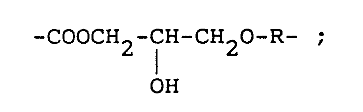
dans lesquels:
n est un nombre entier compris entre 0 et 6,
m est un nombre entier compris entre 0 et 3, et
R est un radical alkylène contenant de 1 à 6 atomes de carbone ou un radical arylène contenant de 6 à 10 atomes de carbone,
tandis que les groupes fonctionnels de la classe f sont liés à la chaine fluoropolyéther au moyen de groupes de liaison divalents choisis parmi:
-CH₂O- ;
-CH₂-O-CH₂- ;
-CF₂- ;
-CF₂O- .

3. Polymères fluorés selon la revendication 1, dans lesquels le composé fluoropolyéther comprend une séquence de une ou plusieurs unités fluorooxyalkylène choisies dans les classes suivantes:
(CF₂O) ;
(CF₂CF₂O) ; 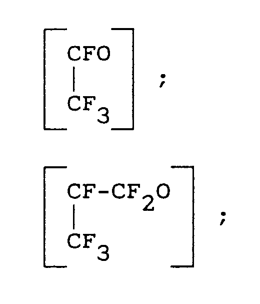
(CH₂CF₂CF₂O) ;
(CF₂CF₂CF₂O) ;
ces séquences pouvant être liées entre elles par des groupes divalents fluorés ou non-fluorés.

4. Polymères fluorés selon la revendication 1, dans lesquels les groupes terminaux fonctionnels appartenant à la classe a sont représentés par la formule suivante:
Si (OR) AA'
dans laquelle:
R est un radical alkyle contenant 1 à 5 atomes de carbone ou un radical aryle contenant 6 à 10 atomes de carbone ou un radical arylalkyle ou alkylaryle contenant 7 à 10 atomes de carbone, et
dans laquelle:
A et A', identiques ou différents l'un de l'autre, sont -R ou -OR.

5. Polymères fluorés selon la revendication 1, dans lesquels les groupes terminaux fonctionnels appartenant à la classe b sont représentés par la formule suivante:
-Ti (OR)₃
dans laquelle les trois groupes -OR sont identiques ou différents les uns des autres, et R est tel que défini dans la revendication 4.

6. Polymères fluorés selon la revendication 1, dans lesquels les groupes terminaux appartenant à la classe f sont des radicaux aromatiques comprenant au moins un noyau aromatique comportant 5 à 6 atomes de carbone et comprenant éventuellement des hétéroatomes, ou un ou plusieurs cycles condensés avec ledit cycle aromatique, certains desdits cycles étant éventuellement de type cycloaliphatique et ces radicaux aromatiques contenant éventuellement les groupes alkyles en C₁-C₃ et/ou alcoxy en C₁-C₃ et/ou des atomes d'halogène en tant que substituants.

7. Polymères fluorés selon l'une quelconque des revendications 1 à 6, dans lesquels le polymère fluoré est un polymère de C₂F₄ ou un copolymère de C₂F₄ avec des quantités mineures de perfluoropropène et/ou d'éthers perfluoroalkylperfluorovinyle.

## Revendications (Revendications pour l'(les) Etat(s) contractant(s) suivant(s): ES)

1. Procédé pour la préparation de polymères fluorés présentant des propriétés mécaniques améliorées ainsi qu'un aspect superficiel amélioré, comprenant l'incorporation dans les polymères ou copolymères de tétrafluoroéthylène de matériaux de renforcement à base de verre, d'amiante et de silicate en général ou de carbone, sous forme de fibres ou de granules ou de fibres polyamides aromatiques, ledit matériau de renforcement ayant été superficiellement traité par des fluoropolyéthers ayant un poids moléculaire moyen compris entre 1000 et 10000 contenant des groupes terminaux fonctionnels susceptibles de former des liaisons de diverses natures avec le matériau de renforcement, ces groupes fonctionnels ayant été choisis dans les groupes suivants:
a. groupes siloxane;
b. des groupes alcoxy-titane;
c. groupe époxy 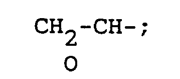
d. des groupes acryliques CH₂ = CH-COO-;
ou méthacryliques 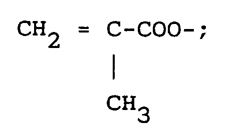
e. groupe isocyanique;
f. radicaux aromatiques contenant éventuellement des hétéroatomes susceptibles de former des liaisons de coordination ou de transfert de charge;
ces groupes fonctionnels étant liés à la chaine fluoropolyéther au moyen de groupes de liaison divalents.

2. Procédé selon la revendication 1, dans lequel les groupes de liaison des groupes fonctionnels a à e sont choisis parmi:
-CONH-R- ;
-CH₂O(CH₂)ₙ- ;
-CH₂O(CH₂-CH₂O)ₘ- ; 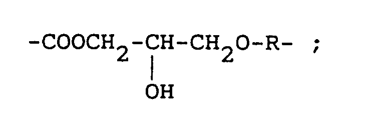
dans lesquels:
n est un nombre entier compris entre 0 et 6,
m est un nombre entier compris entre 0 et 3, et
R est un radical alkylène contenant de 1 à 6 atomes de carbone ou un radical arylène contenant de 6 à 10 atomes de carbone,
tandis que les groupes fonctionnels de la classe f sont liés à la chaine fluoropolyéther au moyen de groupes de liaison divalents choisis parmi:
-CH₂O- ;
-CH₂-O-CH₂- ;
-CF₂- ;
-CF₂O- .

3. Procédé selon la revendication 1, dans lequel le composé fluoropolyéther comprend les séquences de une ou plusieurs unités fluorooxyalkylènes choisies dans les classes suivantes:
(CF₂O) ;
(CF₂CF₂O) ; 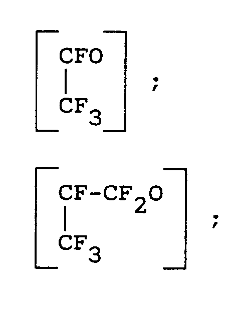
(CH₂CF₂CF₂O) ;
(CF₂CF₂CF₂O) .
ces séquences pouvant être liées entre elles par des groupes divalents fluorés ou non-fluorés.

4. Procédé selon la revendication 1, dans lequel les groupes terminaux fonctionnels appartenant à la classe a sont représentés par la formule suivante:
Si (OR) AA'
dans laquelle:
R est un radical alkyle contenant 1 à 5 atomes de carbone ou un radical aryle contenant 6 à 10 atomes de carbone ou un radical arylalkyle ou alkylaryle contenant 7 à 10 atomes de carbone, et
dans laquelle:
A et A', identiques ou différents l'un de l'autre, sont -R ou -OR.

5. Procédé selon la revendication 1, dans lequel les groupes terminaux fonctionnels appartenant à la classe b sont représentés par la formule suivante:
-Ti (OR)₃
dans laquelle les trois groupes -OR sont identiques ou différents les uns des autres, et R est tel que défini dans la revendication 4.

6. Procédé selon la revendication 1, dans lequel les groupes terminaux appartenant à la classe f sont des radicaux aromatiques comprenant au moins un noyau aromatique comportant 5 à 6 atomes de carbone et comprenant éventuellement des hétéroatomes, ou un ou plusieurs cycles condensés avec ledit cycle aromatique, certains desdits cycles étant éventuellement de type cycloaliphatique et ces radicaux aromatiques contenant éventuellement les groupes alkyles en C₁-C₃ et/ou alcoxy en C₁-C₃ et/ou des atomes d'halogène en tant que substituants.

7. Procédé selon l'une quelconque des revendications 1 à 6, dans lequel le polymère fluoré est un polymère de C₂F₄ ou un copolymère de C₂F₄ avec des quantités mineures de perfluoropropène et/ou d'éthers perfluoroalkylperfluorovinyle.
